# EUROPÄISCHE PATENTSCHRIFT

(11) **EP 2 246 601 B1**
(45) Veröffentlichungstag und Bekanntmachung des Hinweises auf die Patenterteilung: **06.01.2016**
(21) Anmeldenummer: 10157470.5
(22) Anmeldetag: 24.03.2010
(51) Int. Cl.: F16K 31/06, B60T 8/36

(54) **Elektromagnetisches Hydraulikventil**
Electromagnetic hydraulic valve
Soupape hydraulique électromagnétique

(30) Priorität: 30.04.2009 DE 102009019534
(43) Veröffentlichungstag der Anmeldung: 03.11.2010
(73) Patentinhaber: Schaeffler Technologies AG & Co. KG, 91074 Herzogenaurach (DE)
(72) Erfinder: Meisborn, Marco, 91315, Höchstadt (DE); Schulz, Jürgen, 90431, Nürnberg (DE)

(56) Entgegenhaltungen:
- DE-A1- 2 826 973
- DE-A1- 10 103 975
- DE-A1-102005 049 122
- US-A- 4 790 346
- US-A1- 2004 195 278

## Beschreibung

### Gebiet der Erfindung

Die Erfindung betrifft ein elektromagnetisches Hydraulikventil. Dieses umfasst:
- ein Ventilgehäuse mit einem Druckmitteleinlasskanal, einem Druckmittelauslasskanal, einer Magnetspule und einem Ventilsitz,
- einen von der Magnetspule erregbaren Magnetanker und einen am Magnetanker befestigten Ventilstößel,
- ein vom Ventilstößel betätigtes Ventilschließglied, das bei Anlage am Ventilsitz die Verbindung zwischen dem Druckmitteleinlasskanal und dem Druckmittelauslasskanal sperrt,
wobei der Magnetanker mit dem Ventilstößel und das Ventilschließglied längsbeweglich im Ventilgehäuse geführt sind und sich der Ventilstößel und das Ventilschließglied mit einander zugewandten Längsstirnseiten in zugkraftfreier Weise kontaktieren.

### Hintergrund der Erfindung

Ein derartiges Hydraulikventil geht aus der als gattungsbildend betrachteten DE 10 2005 049 122 A1 hervor. Sowohl der Magnetanker mit dem daran befestigten Ventilstößel als auch das Ventilschließglied sind in Gleitführungen des Ventilgehäuses spielbehaftet aufgenommen. Der Ventilstößel und das Ventilschließglied stehen in zugkraftfreiem Kontakt miteinander oder liegen, einfach ausgedrückt, stirnseitig lose aneinander, um Druckkräfte zu übertragen und bei erregtem Magnetanker das Ventilschließglied dichtend gegen den Ventilsitz zu drücken. Erprobungen eines derartigen Hydraulikventils haben jedoch gezeigt, dass die dauerhafte Dichtfunktion des Ventilschließglieds beeinträchtigt wird, wenn dieses im Rahmen des Führungsspiels gegenüber der Längsbewegungsrichtung verkippt und nur einseitig mit entsprechend hohem Dichtflächenverschleiß am Ventilsitz anschlägt. Zudem besteht im Falle des hydraulisch druckausgeglichenen Hydraulikventils mit einem zu diesem Zweck das Ventilschließglied umschließenden Dichtring die Gefahr, dass auch dieser Dichtring durch die permanente Kippbewegung des Ventilschließglieds vorzeitig verschleißt.

Das Verkippen des Ventilschließglieds ist eine unmittelbare Folge von unzulässig hohen Planlauffehlern der das Ventilschließglied kontaktierenden Längsstirnseite des Ventilstößels, an welcher sich die ebene Längsstirnseite des Ventilschließglieds bei jedem Schaltvorgang auszurichten versucht. Die erforderliche Planlauftoleranz am Ventilstößel könnte zwar durch eine 100%-Kontrolle des Planlaufs mit entsprechend hoher Ausschussquote oder eine spanende/schleifende Nacharbeit des Ventilstößels prozesssicher eingehalten werden. Derartige Maßnahmen sind jedoch mit deutlich erhöhten Herstellkosten verbunden.

Die US 4 790 346 A zeigt ein Steuerventil mit einem Gehäuse, einer Spule, einem Anker, einer Verschlussplatte und mit einem Ventilsitz, der am Gehäuse angeordnet ist. Die Verschlussplatte kann mit dem Ventilsitz dichtend zur Anlage gebracht werden, wodurch ein Ablaufkanal verschlossen wird. Die Verschlussplatte wird entgegen der Kraft einer Feder mit Hilfe des Ankers aktuiert. Der Ventilsitz befindet sich in Bezug auf die Verschlussplatte außermittig und in Bezug auf die Bewegungsrichtung des Ankers in achsversetzter Lage. Es werden drei Erhebungen offenbart, die am Gehäuse angeordnet sind und den Ventilsitz bilden. Die Ausführungsform zeigt aufgrund der außermittigen Anordnung des Ablaufkanals Nachteile im Bauraumbedarf.

### Aufgabe der Erfindung

Der vorliegenden Erfindung liegt daher die Aufgabe zugrunde, ein Hydraulikventil der eingangs genannten Art bei möglichst unverändert niedrigen Herstellkosten so fortzubilden, dass eine weitgehend konstante und reproduzierbare Steuerung des Druckmittelflusses durch das Hydraulikventil über dessen gesamter Lebensdauer und dabei insbesondere bei einer sehr hohen Anzahl von Schaltzyklen gewährleistet ist.

### Zusammenfassung der Erfindung

Die Lösung dieser Aufgabe ergibt sich aus den kennzeichnenden Merkmalen des Anspruchs 1, während vorteilhafte Weiterbildungen und Ausgestaltungen der Erfindung den Unteransprüchen entnehmbar sind. Demnach sollen an der Längsstirnseite des Ventilstößels eine ringförmig geschlossene oder mehrere voneinander getrennte Erhebungen angeformt sein, die eine zur Längsbewegungsrichtung senkrecht verlaufende Kontaktebene für die Längsstirnseite des Ventilschließglieds aufspannen.

Das kostengünstige und bezüglich der Orthogonalität der Kontaktebene zur Längsbewegungsrichtung gleichermaßen hochpräzise Umformen der Längsstirnseite des Ventilstößels erfolgt besonders bevorzugt mit einem Prägewerkzeug, das die aus dem Magnetanker und dem daran bereits befestigten Ventilstößel gebildete Baueinheit am Umfang des Magnetankers aufnimmt und mithin in die Längsbewegungsrichtung ausrichtet und das mit einem in der Längsbewegungsrichtung verfahrenden Prägestempel auf der Längsstirnseite des Ventilstößels aufsetzt, um den Stößelwerkstoff zu der oder den Erhebungen zu verformen.

Im Falle, mehrerer, voneinander getrennter und optional kreis- oder ellipsenförmiger Erhebungen sind vorzugsweise drei Erhebungen vorgesehen, die bezüglich der Längsbewegungsrichtung gleichmäßig um jeweils 120° zueinander versetzt sind. Gegenüber lediglich einer ringförmigen Erhebung ist die Ausgestaltung mit drei Erhebungen neben der exakten Bestimmtheit der Kontaktebene dahingehend vorteilhaft, dass zwar die Kontaktpressungen infolge der geringeren Kontaktfläche höher sind, jedoch bereits nach wenigen Schaltzyklen des Hydraulikventils zu einer verschleißresistenten Werkstoffverfestigung der Kontaktpartner führen. Für den Fall, dass der Ventilstößel als Rohr und nicht zylindrisch, sondern mit einem im wesentlichen dreikantförmigen Profil ausgebildet ist, sollen die Erhebungen an den Profilecken angeordnet sein. Dennoch können als Kontakt zwischen dem Ventilschließglied und dem Ventilstößel auch zwei oder mehr als drei Erhebungen vorgesehen sein. Unabhängig von der Anzahl der Erhebungen können diese beliebig geformt sein, solange die zur Längsbewegungsrichtung senkrecht verlaufende Kontaktebene bestimmt ist.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung dargestellt sind. Es zeigen:
- Figur 1: einen Längsschnitt eines elektromagnetischen Hydraulikventils;
- Figur 2: eine Baueinheit des Hydraulikventils, bestehend aus einem Magnetanker und einem daran befestigten Ventilstößel, im Längsschnitt;
- Figur 3: die Ansicht A gemäß Figur 2 auf den Ventilstößel und
- Figur 4: die Ansicht A gemäß Figur 2 auf einen dazu alternativen Ventilstößel.

### Detaillierte Beschreibung der Zeichnungen

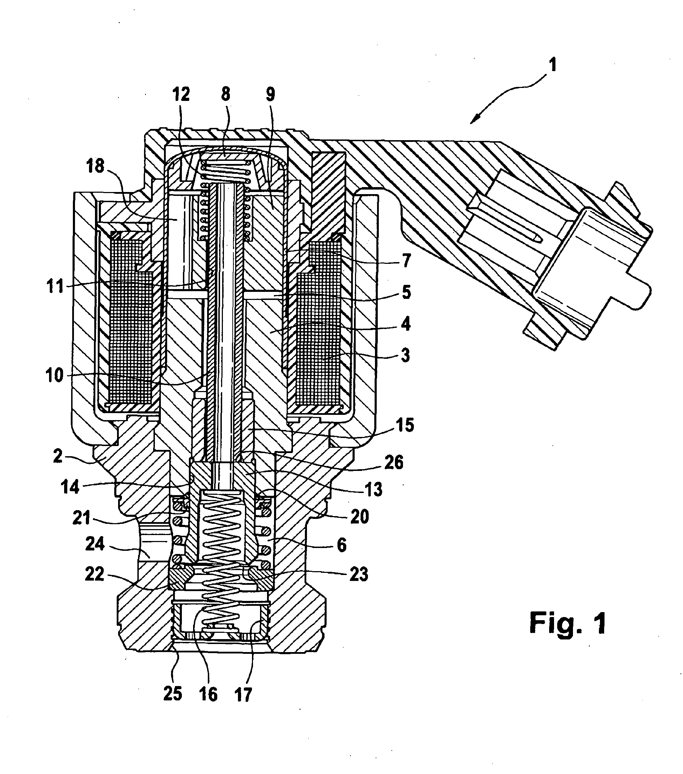

Fig. 1 zeigt ein als 2/2-Wege-Sitzventil ausgeführtes, elektromagnetisches Hydraulikventil 1 im Längsschnitt. Das Hydraulikventil 1 weist ein in Patronenbauweise ausgeführtes Ventilgehäuse 2 auf, das fertigungstechnisch als automatengerechtes Drehteil ausgebildet ist. Im Oberteil des Ventilgehäuses 2 sind eine Magnetspule 3 und ein rohrförmiger Magnetkern 4 eingesetzt, der mittels einer Außenverstemmung des Ventilgehäuses 2 flüssigkeitsdicht in diesem fixiert ist. Auf den Magnetkern 4, der einerseits einen Magnetankerraum 5 und andererseits einen Druckmittelraum 6 begrenzt, ist eine äußerst dünnwandige, im Tiefziehverfahren hergestellte und in ihrem Endbereich topfförmig geschlossene Hülse 7 aufgesetzt, die im Endbereich eine massive Endscheibe 8 aufnimmt. Ein unterhalb der Endscheibe 8 längsbeweglich in der Hülse 7 geführter Magnetanker 9 ist mit einem rohrförmigen Ventilstößel 10 verbunden, der mittels eines Längspressverbands in einer Stufenbohrung 11 des Magnetankers 9 befestigt ist. Zwischen dem Magnetanker 9 und der Endscheibe 8 befindet sich im Magnetankerraum 5 eine Rückstellfeder 12, die zur sicheren Ausrichtung abschnittsweise in der Stufenbohrung 11 geführt ist.

Die aus Magnetanker 9 und Ventilstößel 10 bestehende Baueinheit dient zur Betätigung eines ebenfalls rohrförmigen Ventilschließglieds 13, dessen Außenmantelfläche ebenso wie die Außenmantelfläche des Ventilstößels 10 abschnittsweise in einer zentral gelegenen Durchgangsbohrung 14 des Magnetkerns 4 längsbeweglich geführt ist. Die Durchgangsbohrung 14 ist hierzu als Stufenbohrung mit einem unteren, erweiterten Abschnitt ausgeführt, in dem das Ventilschließglied 13 und eine Buchse 15 aufgenommen sind. Der Innendurchmesser der Buchse 15 ist zur Zentrierung und Führung des Ventilstößels 10 an dessen Außendurchmesser angepasst. Der Außendurchmesser der Buchse 15 ist hingegen zur Herstellung einer Pressverbindung an den Innendurchmesser der Durchgangsbohrung 14 in deren erweitertem Abschnitt angepasst, wozu die Durchgangsbohrung 14 mit Rillen versehen ist, um eine kontinuierliche Einpresskraft sicherzustellen. Die Einpresstiefe der Buchse 15 im Magnetkern 4 ist derart gewählt, dass auf einfache Weise der gewünschte Hub für das Ventilschließglied 13 eingestellt werden kann.

Bei elektromagnetisch nicht erregtem Magnetanker 9 ruht das Ventilschließglied 13 unter der Wirkung einer Ventilfeder 16 in der offenen Position an der Stirnfläche der Buchse 15. Die Ventilfeder 16 ist mittels eines von unten in die Öffnung des Ventilgehäuses 2 eingepreßten Federanschlags 17 vorgespannt und dementsprechend auch einstellbar, wobei die Pressverbindung für den Federanschlag 17 fertigungstechnisch der bereits erläuterten Pressverbindung für die Buchse 15 entspricht. Die im Innendurchmesser abgesetzte Rohrform des Ventilschließglieds 13 ermöglicht eine sichere, kompakte Aufnahme und Abstützung einzelner Windungen der Ventilfeder 16. Das vom Ventilschließglied 13 abgewandte Federende ist mittels eines Mundstücks am kappenförmigen Federanschlag 17 gleichfalls zentriert, der mittels Tiefziehen von Dünnblech hergestellt ist.

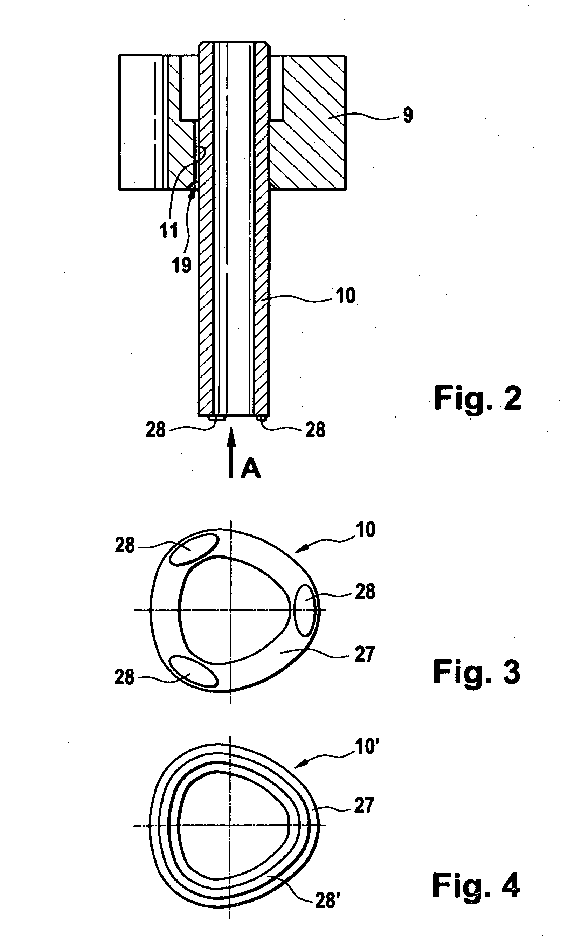

Zur Reduzierung des hydraulischen Widerstands ist der ansonsten zylindrische Magnetanker 9 parallel zu dessen Längsachse von vier gleichmäßig umfangsverteilten Druckausgleichsbohrungen 18 durchdrungen. Das durch den Druckmittelraum 6 strömende Druckmittel kann somit ungehindert durch das Ventilschließglied 13, den Ventilstößel 10 und den Magnetanker 9 in den oberen Magnetankerraum 5 und damit zum Endbereich der Hülse 7 gelangen, so dass unabhängig von Druck- und Temperaturunterschieden des Druckmittels vorteilhaft eine nahezu gleichbleibende Schaltcharakteristik des Hydraulikventils 1 gewährleistet ist. Ebenso ist der Ventilstößel 10 als im wesentlichen dreikantförmiges Profil ausgebildet (siehe stirnseitige Ansicht A auf den Ventilstößel 10 in Figur 3), so dass Druckmittel auch durch drei sichelförmige Spalte 19 zwischen dem Ventilstößel 10 und der Stufenbohrung 11 hindurch strömen wann (siehe Figur 2).

In diesem Zusammenhang ist der hydraulische Druckausgleich des Hydraulikventils 1 von besonderer Bedeutung. Zu diesem Zweck ist das Ventilschließglied 13 an dessen Außenmantelfläche von einem Dichtring 20 umschlossen, der mittels eines federbelasteten Federtellers 21 von unten gegen die Stirnfläche des Magnetkerns 4 gepresst wird. Bei geschlossener Ventilschaltstellung separiert der Dichtring 20 den Magnetankerraum 5 vom Druckmittelraum 6 und verhindert unerwünschte Spaltleckageströme durch die Spielpassung zwischen Ventilschließglied 13 und Magnetkern 4 in Richtung des Magnetankerraums 5.

Oberhalb des Federanschlags 17 ist in das Ventilgehäuse 2 ein Ringkörper 22 eingepresst, um bei geschlossener Ventilschaltstellung einen mit dem Ventilschließglied 13 dichtend zusammenwirkenden Ventilsitz 23 in Form eines Kegeldichtsitzes zu bilden. Das Ventilgehäuse 2 weist auf Höhe des Ventilschließglieds 13 und damit oberhalb des Ventilsitzes 23 einen Druckmitteleinlasskanal 24 auf, der in der abbildungsgemäßen offenen Ventilschaltstellung mit einem von unten vertikal in das Ventilgehäuse 2 einmündenden Druckmittelauslasskanal 25 über den Druckmittelraum 6 verbunden ist.

Wie eingangs erläutert, liegen das Ventilschließglied 13 und der Ventilstößel 10 stirnseitig lose aneinander an, so dass sich bei elektromagnetisch erregtem Magnetanker 9 das vom Ventilstößel 10 betätigte Ventilschließglied 13 mit seiner ebenen Längsstirnseite 26 an der diese kontaktierenden Längsstirnseite 27 des Ventilstößels 10 (siehe Figur 3) ausrichtet, soweit das Führungsspiel des Ventilschließglieds 13 gegenüber dem Magnetkern 4 dies zulässt. Ein hierdurch erzwungenes Verkippen des Ventilschließglieds 13 gegenüber dessen Längsbewegungsrichtung mit entsprechend einseitig schiefem Aufsetzen auf dem Ventilsitz 23 wird erfindungsgemäß eliminiert oder zumindest vernachlässigbar klein gehalten, indem an der Längsstirnseite 27 des Ventilstößels 10 mehrere voneinander getrennte Erhebungen 28 angeformt sind, die eine zur Längsachse des Magnetankers 9 und folglich zur Längsbewegungsrichtung von Magnetanker 9 und Ventilstößel 10 weitestgehend exakt senkrecht verlaufende Kontaktebene für die Längsstirnseite 26 des Ventilschließglieds 13 aufspannen. Somit sind der Magnetanker 9 mit Ventilstößel 10, das sich an der Kontaktebene ausrichtende Ventilschließglied 13 und der Ventilsitz 23 hinreichend koaxial zueinander ausgerichtet, und der vorzeitige Verschleiß des Ventilsitzes 23 sowie des Dichtrings 20 infolge des eingangs erläuterten Verkippens des Ventilschließglieds 13 werden wirkungsvoll verhindert.

Wie es aus Figur 3 deutlich wird, sind drei identische, ellipsenförmige Erhebungen 28 vorgesehen, die mittels Kaltumformung und vorliegend Prägen der Längsstirnseite 27 erzeugt und bezüglich der Längsbewegungsrichtung gleichmäßig um jeweils 120° zueinander versetzt an den Profilecken des dreikantförmigen Ventilstößels 10 angeordnet sind. Im Vergleich zur Gesamtfläche der Längsstirnseite 27 ist deren zur Verfügung stehende Kontaktfläche an den Erhebungen 28 klein, so dass die hohen Kontaktpressungen im anfänglichen Verlauf der Ventilschaltungen zu einer verschleißresistenten Materialverfestigung der Erhebungen 28 führen.

Aus Figur 4 geht eine hierzu alternative Ausgestaltung hervor. Diese unterscheidet sich lediglich dadurch, dass eine einzige, ringförmig geschlossene Erhebung 28' vorgesehen ist, die ebenfalls mittels eines entsprechend modifizierten Prägestempels an der Längsstirnseite 27 des Ventilstößels 10' angeformt ist.

### Bezugszahlen

- 1: Hydraulikventil
- 2: Ventilgehäuse
- 3: Magnetspule
- 4: Magnetkern
- 5: Magnetankerraum
- 6: Druckmittelraum
- 7: Hülse
- 8: Endscheibe
- 9: Magnetanker
- 10: Ventilstößel
- 11: Stufenbohrung des Magnetankers
- 12: Rückstellfeder
- 13: Ventilschließglied
- 14: Durchgangsbohrung des Magnetkerns
- 15: Buchse
- 16: Ventilfeder
- 17: Federanschlag
- 18: Druckausgleichsbohrung
- 19: Spalt
- 20: Dichtring
- 21: Federteller
- 22: Ringkörper
- 23: Ventilsitz
- 24: Druckmitteleinlasskanal
- 25: Druckmittelauslasskanal
- 26: Längsstirnseite des Ventilschließglieds
- 27: Längsstirnseite des Ventilstößels
- 28: Erhebung

## Patentansprüche

1. Elektromagnetisches Hydraulikventil (1), umfassend:
- ein Ventilgehäuse (2) mit einem Druckmitteleinlasskanal (24), einem Druckmittelauslasskanal (25), einer Magnetspule (3) und einem Ventilsitz (23),
- einen von der Magnetspule (3) erregbaren Magnetanker (9) und einen am Magnetanker (9) befestigten Ventilstößel (10, 10'),
- ein vom Ventilstößel (10, 10') betätigtes Ventilschließglied (13), das bei Anlage am Ventilsitz (23) die Verbindung zwischen dem Druckmitteleinlasskanal (24) und dem Druckmittelauslasskanal (25) sperrt,
wobei der Magnetanker (9) mit dem Ventilstößel (10, 10') und das Ventilschließglied (13) längsbeweglich im Ventilgehäuse (2) geführt sind und sich der Ventilstößel (10, 10') und das Ventilschließglied (13) mit einander zugewandten Längsstirnseiten (26, 27) in zugkraftfreier Weise kontaktieren, **dadurch gekennzeichnet, dass** an der Längsstirnseite (27) des Ventilstößels (10, 10') mehrere voneinander getrennte Erhebungen (28, 28') angeformt sind, die eine zur Längsbewegungsrichtung senkrecht verlaufende Kontaktebene für die Längsstirnseite (26) des Ventilschließglieds (13) aufspannen.

2. Hydraulikventil (1) nach Anspruch 1, **dadurch gekennzeichnet, dass** die Erhebungen (28, 28') durch Prägen hergestellt sind.

3. Hydraulikventil (1) nach Anspruch 1, **dadurch gekennzeichnet, dass** drei Erhebungen (28) vorgesehen sind, die bezüglich der Längsbewegungsrichtung gleichmäßig um jeweils 120° zueinander versetzt sind.

4. Hydraulikventil (1) nach Anspruch 3, **dadurch gekennzeichnet, dass** der Ventilstößel (10) als Rohr mit einem im wesentlichen dreikantförmigen Profil ausgebildet ist, wobei die Erhebungen (28) an den Profilecken angeordnet sind.

5. Hydraulikventil (1) nach Anspruch 1, **dadurch gekennzeichnet, dass** die Erhebungen (28) kreis- oder ellipsenförmig sind.

## Claims

1. Electromagnetic hydraulic valve (1), comprising:
- a valve housing (2) with a pressure medium inlet duct (24), a pressure medium outlet duct (25), a magnet coil (3) and a valve seat (23),
- a magnet armature (9) which can be excited by the magnet coil (3) and a valve tappet (10, 10') which is fastened to the magnet armature (9),
- a valve closing, member (13) which is actuated by the valve tappet (10, 10') and, when it bears against the valve seat (23), shuts the connection between the pressure medium inlet duct (24) and the pressure medium outlet duct (25),
the magnet armature (9), with the valve tappet (10, 10'), and the valve closing member (13) being guided longitudinally displaceably in the valve housing (2), and the valve tappet (10, 10') and the valve closing member (13) making contact in a manner free from tensile forces by way of longitudinal end sides (26, 27) which face one another, **characterized in that** a plurality of elevations (28, 28') which are separate from one another are formed integrally on the longitudinal end side (27) of the valve tappet (10, 10'), which elevations (28, 28') define a contact plane for the longitudinal end side (26) of the valve closing member (13), which contact plane runs perpendicularly with respect to the longitudinal movement direction.

2. Hydraulic valve (1) according to Claim 1, **characterized in that** the elevations (28, 28') are produced by way of stamping.

3. Hydraulic valve (1) according to Claim 1, **characterized in that** three elevations (28) are provided which are offset uniformly by in each case 120° with respect to one another with regard to the longitudinal movement direction.

4. Hydraulic valve (1) according to Claim 3, **characterized in that** the valve tappet (10) is configured as a tube with a substantially triangular profile, the elevations (28) being arranged at the profile corners.

5. Hydraulic valve (1) according to Claim 1, **characterized in that** the elevations (28) are circular or elliptical.

## Revendications

1. Soupape hydraulique électromagnétique (1), comprenant :
- un boîtier de soupape (2) comprenant un canal d'entrée de fluide sous pression (24), un canal de sortie de fluide sous pression (25), une bobine magnétique (3) et un siège de soupape (23),
- un induit magnétique (9) pouvant être excité par la bobine magnétique (3) et un poussoir de soupape (10, 10') fixé à l'induit magnétique (9),
un organe de fermeture de soupape (13) commandé par le poussoir de soupape (10, 10'), qui, lors de l'appui contre le siège de soupape (23), bloque la liaison entre le canal d'entrée de fluide sous pression (24) et le canal de sortie de fluide sous pression (25),
l'induit magnétique (9) avec le poussoir de soupape (10, 10') et l'organe de fermeture de soupape (13) étant guidés de manière déplaçable longitudinalement dans le boîtier de soupape (2) et le poussoir de soupape (10, 10') et l'organe de fermeture de soupape (13) venant en contact sans force de traction par des côtés frontaux longitudinaux tournés l'un vers l'autre (26, 27), **caractérisée en ce que** plusieurs rehaussements séparés les uns des autres (28, 28') sont façonnés sur le côté frontal longitudinal (27) du poussoir de soupape (10, 10'), lesquels sous-tendent un plan de contact, s'étendant perpendiculairement à la direction de déplacement longitudinal, pour le côté frontal longitudinal (26) de l'organe de fermeture de soupape (13).

2. Soupape hydraulique (1) selon la revendication 1, **caractérisée en ce que** les rehaussements (28, 28') sont fabriqués par gaufrage.

3. Soupape hydraulique (1) selon la revendication 1, **caractérisée en ce que** trois rehaussements (28) sont prévus, lesquels sont décalés uniformément les uns des autres à chaque fois de 120° par rapport à la direction de déplacement longitudinal.

4. Soupape hydraulique (1) selon la revendication 3, **caractérisée en ce que** le poussoir de soupape (10) est réalisé sous la forme d'un tube ayant, un profilé essentiellement à trois pans, les rehaussements (28) étant disposés sur les coins du profilé.

5. Soupape hydraulique (1) selon la revendication 1, **caractérisée en ce que** les rehaussements (28) sont de forme circulaire ou ellipsoïdale.
